# EUROPÄISCHE PATENTANMELDUNG

(11) **EP 0 913 578 A1**
(43) Veröffentlichungstag der Anmeldung: **06.05.1999**
(21) Anmeldenummer: 98114605.3
(22) Anmeldetag: 01.08.1998
(51) Int. Cl.: F04B 1/04, B60T 8/40

(54) **Radialkolbenpumpe mit Evakuierventil**

(30) Priorität: 30.10.1997 DE 19747851
(71) Anmelder: ROBERT BOSCH GMBH, 70442 Stuttgart (DE)
(72) Erfinder: Siegel, Heinz, 70435 Stuttgart (DE)

(57) **Zusammenfassung**

Die Erfindung betrifft eine Kolbenpumpe (10) für eine schlupfgeregelte, hydraulische Fahrzeugbremsanlage. Die Kolbenpumpe (10) weist einen zu einer Hubbewegung antreibbaren Kolben (20) sowie zwei Rückschlagventile als Einlaßventil (38) und als Auslaßventil (58) zur Steuerung einer Fluidströmung durch die Kolbenpumpe (10) auf, wobei zumindest das Auslaßventil (58) eine Ventilschließfeder (64) aufweist, die ein schnelles Schließen des Auslaßventils (58) bewirkt. Um einen Verdrängungsraum (56) der Kolbenpumpe (10) vollständig evakuieren zu können, schlägt die Erfindung vor, ein als federloses Rückschlagventil ausgebildetes Evakuierventil (86) mit kleinem Durchmesser und einem leichten Ventilschließkörper (92) dem Auslaßventil (58) hydraulisch parallel zu schalten.

## Beschreibung

### Stand der Technik

Die Erfindung betrifft eine Kolbenpumpe mit den Merkmalen des Oberbegriffs des Anspruchs 1, die insbesondere zur Verwendung in einer hydraulischen Fahrzeugbremsanlage vorgesehen ist.

Derartige Kolbenpumpen sind an sich bekannt, es wird beispielhaft auf die DE 41 07 979 A1 verwiesen. Die bekannte Kolbenpumpe weist einen Kolben auf, der in einem Pumpengehäuse axial verschieblich aufgenommen ist. Mittels eines elektromotorisch rotierend antreibbaren Exzenters ist der Kolben zu einer in axialer Richtung hin- und hergehenden Hubbewegung antreibbar. Zur Steuerung einer Fluiddurchströmung weist die bekannte Kolbenpumpe zwei Rückschlagventile auf, deren eines ein Ein- und deren anderes ein Auslaßventil bildet. Das Auslaßventil schließt federbelastet, das Einlaßventil kann federbelastet schließen, kann jedoch auch schließfederlos sein, insbesondere, wenn die Kolbenpumpe selbstsaugend ausgebildet ist.

Um einen guten hydraulischen Pumpenwirkungsgrad zu erzielen und zur Geräuschreduzierung ist es wichtig, daß das Auslaßventil der Kolbenpumpe am Totpunkt des Kolbens am Ende eines Förderhubs rasch schließt. Der Förderhub ist die Kolbenbewegung in einer Richtung, die ein Volumen eines Verdrängungsraums der Kolbenpumpe verkleinert und dadurch zuvor während eines Saughubs angesaugtes Fluid aus dem Verdrängungsraum verdrängt. Ein rasches Schließen des Auslaßventils erfordert eine Ventilschließfeder mit hoher Federkraft, die bei bekannten Kolbenpumpen beispielsweise einen Offnungsdruck des Auslaßventils von über ein bar bewirkt.

Moderne Fahrzeugbremsanlagen mit einer Schlupfregeleinrichtung werden heutzutage vor dem Befüllen mit Bremsflüssigkeit üblicherweise evakuiert. Ein Befüllen einer Fahrzeugbremsanlage ohne vorherige Evakuierung würde zu Lufteinschlüssen in Hohlräumen der Fahrzeugbremsanlage führen, die von Magnetventilen, Hydrospeichern, Dämpfern und verwinkelten und Sacklöcher bildenden Fluidbohrungen gebildet sind, die Fahrzeugbremsanlage wäre nicht funktionstüchtig. Ein einfaches Befüllen der Fahrzeugbremsanlage mit Verdrängung der in ihr enthaltenen Luft durch einströmende Bremsflüssigkeit ohne vorherige Evakuierung ist nicht möglich. Aus Vorstehendem ergibt sich auch, daß sämtliche Hohlräume der Fahrseugbremsanlage möglichst vollständig evakuiert werden müssen bevor die Fahrzeugbremsanlage mit Bremsfluid befüllt wird, es darf keine Luft in Hohlräumen der evakuierten Fahrzeugbremsanlage eingeschlossen sein. In Hohlräumen verbleibende Luft kann in manchen Fällen ein unangenehm weiches Bremspedalverhalten ergeben.

Wird die bekannte Kolbenpumpe beim Befüllen einer hydraulischen Fahrzeugbremsanlage, deren Bestandteil die Kolbenpumpe ist, von der Einlaß- und/oder der Auslaßseite her evakuiert, bewirkt ein Vakuum auf der Einlaßseite eine das Einlaßventil schließende Druckdifferenz zwischen Verdrängungsraum der Kolbenpumpe und Pumpeneinlaß. Durch das Einlaßventil hindurch läßt sich der Verdrängungsraum nicht evakuieren, unabhängig davon, ob das Einlaßventil federbelastet oder federlos ist. Wird die Kolbenpumpe von der Auslaßseite her evakuiert, wirkt eine Druckdifferenz von höchstens 1 bar, die das Auslaßventil im Öffnungssinn beaufschlagt. Die Druckdifferenz ergibt sich aus dem Druck der im Verdrängungsraum eingeschlossenen Luft, der dem Umgebungsluftdruck entspricht, und dem Vakuum auf der Auslaßseite der Kolbenpumpe. Diese Druckdifferenz vermag das Auslaßventil nicht gegen die Kraft der Ventilschließfeder des Auslaßventils zu öffnen, die einen Öffnungsdruck über ein bar erfordert. Infolge dessen bleibt die Luft im Verdrängungsraum eingeschlossen, der Verdrängungsraum der Kolbenpumpe wird nicht evakuiert. Dieser Lufteinschluß im Verdrängungsraum der Kolbenpumpe ist in jedem Fall unerwünscht, er beeinträchtigt die Funktion der Fahrzeugbremsanlage. Eventuell gelingt es, den Verdrängungsraum durch Betrieb der Kolbenpumpe mit Bremsflüssigkeit zu befüllen und die eingeschlossene Luft aus dem Verdrängungsraum zu verdrängen. Es kann allerdings auch passieren, daß die im Verdrängungsraum eingeschlossene Luft auch bei Betrieb der Kolbenpumpe im Verdrängungsraum verbleibt, so daß die Kolbenpumpe nicht fördert.

Besonders stark ist das Problem des Lufteinschlusses im Verdrängungsraum der Kolbenpumpe bei Evakuierung der Fahrzeugbremsanlage bei Kolbenpumpen, die eine im Verdrängungsraum angeordnete Kolbenrückstellfeder aufweisen. Bei diesen Kolbenpumpen ist ein Totraum, also das verbleibende Volumen des Verdrängungsraums am Ende des Förderhubs, besonders groß, da die Kolbenrückstellfeder eine verbleibende Mindesthöhe des Verdrängungsraums in axialer Richtung erfordert.

### Vorteile der Erfindung

Die erfindungsgemäße Kolbenpumpe mit den Merkmalen des Anspruchs 1 weist ein Evakuierventil auf, das mit dem Verdrängungsraum der Kolbenpumpe in Verbindung steht und durch das der Verdrängungsraum evakuierbar ist. Die erfindungsgemäße Kolbenpumpe hat den Vorteil, daß ihr Verdrängungsraum zuverlässig und vollständig evakuierbar ist, was eine vollständige Befüllung der Kolbenpumpe einschließlich ihres Verdrängungsraums mit Bremsflüssigkeit sicherstellt, ohne daß Lufteinschlüsse im Verdrängungsraum zu befürchten sind.

Auf das Auslaßventil kann nicht verzichtet werden, da das Evakuierventil keinen ausreichenden Durchströmquerschnitt zur Verfügung stellt.

Die Unteransprüche haben vorteilhafte Ausgestaltungen und Weiterbildungen der im Anspruch 1 angegebenen Erfindung zum Gegenstand.

Gemäß Anspruch 2 ist das Evakuierventil als Rückschlagventil ausgebildet. Dies hat den Vorteil, daß das Evakuierventil beim Evakuieren der Fahrzeugbremsanlage selbsttätig öffnet.

Bei einer Weiterbildung gemäß Anspruch 3 ist das Evakuierventil dem Auslaßventil der Kolbenpumpe parallel geschaltet. Diese Anordnung des Evakuierventils hat den Vorteil, daß es nicht schadet, wenn das Evakuierventil während eines Betriebs der erfindungsgemäßen Kolbenpumpe gemeinsam mit dem Auslaßventil öffnet und schließt. Es sind also keine Maßnahmen erforderlich, die das Evakuierventil beim Betrieb der Kolbenpumpe geschlossen halten.

In bevorzugter Ausgestaltung der Erfindung ist das Evakuierventil federlos, so daß keine Druckdifferenz notwendig ist, um das Evakuierventil in geöffnetem Zustand zu halten, wodurch eine vollständige Evakuierung erfolgt und ein vorzeitiges Schließen des Evakuierventils durch eine Ventilschließfeder vermieden wird (Anspruch 4).

Gemäß Anspruch 5 weist das Evakuierventil einen kleinen Querschnitt und einen kleinen Ventilschließkörper auf. Klein ist hier insbesondere in Bezug auf das Auslaßventil zu sehen. Ein kleiner Querschnitt reicht zur Evakuierung aus, da ein erhöhter Strömungswiderstand des Evakuierventils aufgrund seines kleinen Querschnittes und eine dadurch verlängerte Evakuierdauer nicht störend ins Gewicht fallen. Ein kleiner Querschnitt des Evakuierventils ermöglicht einen kleinen und damit leichten Ventilschließkörper und damit eine kurze Ventilschließzeit des Evakuierventils, auch wenn dieses keine Ventilschließfeder aufweist. Eine kurze Ventilschließzeit ist, wie eingangs zum Auslaßventil ausgeführt, für einen guten hydraulischen Pumpenwirkungsgrad notwendig. Zudem verringert ein kleiner und leichter Ventilschließkörper eine Geräuschbildung.

Auch ein kurzer, begrenzter Ventilhub des Evakuierventils gemäß Anspruch 6 dient einer kurzen Ventilschließzeit, mindert eine Geräuschbildung und stört nicht bei der Evakuierung.

Eine Begrenzung des Ventilhubs des Evakuierventils erfolgt gemäß Anspruch 7 durch eine Segmentverstemmung, also durch eine oder mehrere über den Umfang verteilt angeordnete Nasen oder dgl., die in eine Ventilbohrung hineinstehen, in der ein Ventilschließkörper des Evakuierventils aufgenommen ist, wobei die Nasen oder dgl. den Ventilschließkörper zwischen sich und einem Ventilsitz einschließen, so daß der Ventilschließkörper verliersicher in der Bohrung gehalten und ein Ventilhub, also der Weg, um den der Ventilschließkörper vom Ventilsitz abheben kann, bis er an der Segmentverstemmung anstößt, begrenzt und kurz ist. Die Segmentverstemmung als Ventilhubbegrenzung hat den Vorteil, daß sie einfach und preiswert herstellbar ist. Der Ventilhub läßt sich sehr genau einstellen. Des weiteren ist kein extra Bauteil für die Ventilhubbegrenzung erforderlich. Die Segmentverstemmung ermöglicht einen ausreichenden Fluiddurchfluß.

Gemäß Anspruch 8 mündet das Evakuierventil in eine Ringnut, die beispielsweise in einer einem Verschlußstopfen zugewandten, äußeren Stirnseite eines Laufbuchsenbodens oder in einer dem Laufbuchsenboden zugewandten Stirnseite des Verschlußstopfens angebracht ist. Im jeweils anderen Teil, also beispielsweise im Verschlußstopfen oder im Laufbuchsenboden ist eine Radialnut oder allgemeiner ausgedrückt, eine zum Umfang führende Nut angebracht, die zu einem Pumpenauslaß führt. Die Ringnut und die Radialnut werden vom jeweils anderen Teil, also vom Verschlußstopfen bzw. vom Laufbuchsenboden zu einem Durchströmkanal abgedeckt. Die Ausbildung einer Ringnut, die mit einer Radialnut kommuniziert, hat den Vorteil, daß die beiden Bauteile, also beispielsweise eine den Laufbuchsenboden aufweisende Laufbuchse und der Verschlußstopfen winkelunabhängig voneinander in ein Pumpengehäuse eingebaut werden können.

Beim Befüllen der Fahrzeugbremsanlage nach dem Evakuieren befüllt sich der Verdrängungsraum der Kolbenpumpe von selbst mit Bremsflüssigkeit, wenn der Öffnungsdruck des Einlaßventils kleiner als der Druck der einströmenden Bremsflüssigkeit ist. Ist der Öffnungsdruck des Einlaßventils größer, befüllt sich der Verdrängungsraum beim ersten Betätigen der Kolbenpumpe vollständig mit Bremsflüssigkeit. Ein Lufteinschluß ist ausgeschlossen, da der Verdrängungsraum zuvor evakuiert war.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

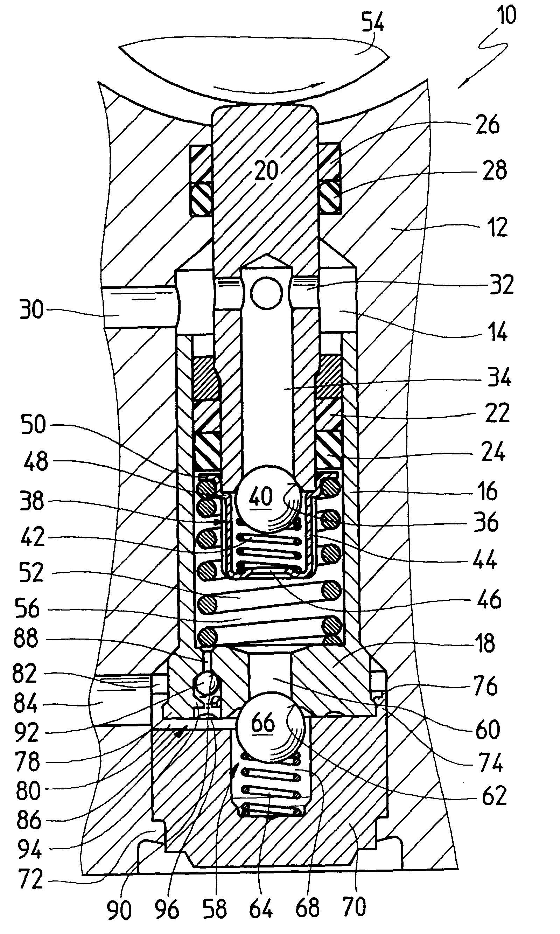

Die Erfindung wird nachfolgend anhand eines in der Zeichnung dargestellten Ausführungsbeispiels näher erläutert. Die einzige Figur zeigt eine erfindungsgemäße Kolbenpumpe im Achsschnitt.

### Beschreibung des Ausführungsbeispiels

Die in der Zeichnung dargestellte, insgesamt mit 10 bezeichnete, erfindungsgemäße Kolbenpumpe weist ein Pumpengehäuse 12 mit einer durchgehenden, gestuften Pumpenbohrung 14 auf. Das Pumpengehäuse 12 ist Teil eines Hydraulikblocks einer an sich bekannten, im übrigen nicht dargestellten, schlupfgeregelten hydraulischen Fahrzeugbremsanlage. In den Hydraulikblock, von dem in der Zeichnung lediglich ein die Kolbenpumpe 10 umgebendes Bruchstück dargestellt ist, sind außer der Kolbenpumpe 10 weitere hydraulische Bauelemente der Fahrzeugbremsanlage, wie Magnetventile, Hydrospeicher und Dämpfer eingesetzt und hydraulisch miteinander und mit der Kolbenpumpe 10 verschaltet.

In die Pumpenbohrung 14 ist eine Laufbuchse 16 mit einem mit ihr einstückigen Laufbuchsenboden 18 eingesetzt. In der Laufbuchse 16 ist ein bolzenförmiger Kolben 20 über etwa die Hälfte seiner Länge aufgenommen. Ein in der Laufbuchse 16 befindliches Ende des Kolbens 20 ist mittels eines auf den Kolben 20 aufgesetzten Führungsrings 22 axialverschieblich in der Laufbuchse 16 geführt und mittels eines am Führungsring 22 anliegend auf den Kolben 20 aufgesetzten Dichtrings 24 in der Laufbuchse 16 abgedichtet.

Ein aus der Laufbuchse 16 vorstehendes Ende des Kolbens 20 ist mit einem Führungsring 26 im Pumpengehäuse 12 axialverschieblich geführt und mit einem Dichtring 28 im Pumpengehäuse 12 abgedichtet. Der Führungsring 26 und der Dichtring 28 sind in eine gemeinsame Nut in der Pumpenbohrung 14 im Pumpengehäuse 12 eingelegt.

Zum Fluideinlaß ist im Pumpengehäuse 12 eine Einlaßbohrung 30 radial zur Pumpenbohrung 14 angebracht, die in die Pumpenbohrung 14 mündet. Aus der Einlaßbohrung 30 einströmendes Fluid strömt durch die Pumpenbohrung 14 in einander kreuzende Querbohrungen 32, die etwa in der Mitte des Kolbens 20 angebracht sind. Im Kolben 20 ist eine axiale Sackbohrung 34 angebracht, die in Richtung des Laufbuchsenbodens 18 verläuft und an einem dem Laufbuchsenboden 18 zugewandten Stirnende des Kolbens 20 mit einem konischen Ventilsitz 36 mündet. Die Sackbohrung 34 wird nahe ihres Grundes von den Querbohrungen 32 gekreuzt.

Als Einlaßventil 38 weist die erfindungsgemäße Kolbenpumpe 10 ein federbelastetes Rückschlagventil auf, das an der dem Laufbuchsenboden 18 zugewandten Stirnseite des Kolbens 20 angebracht ist. Das Einlaßventil 38 weist eine Ventilkugel 40 als Ventilschließkörper auf, die von einer Schraubendruckfeder als Ventilschließfeder 42 gegen den Ventilsitz 36 am Kolben 20 gedrückt wird. Die Ventilkugel 40 und die Ventilschließfeder 42 sind in einem napfförmigen Ventilkäfig 44 aufgenommen, der an dem dem Laufbuchsenboden 18 zugewandten Stirnende des Kolbens 20 angebracht ist. Der Ventilkäfig 44 ist ein napfförmiges Tiefziehteil aus Blech, das mit einer Durchströmöffnung 46 in seinem Boden versehen ist. An einer offenen Seite erweitert sich der Ventilkäfig 44 mit einer Ringstufe 48, mit der er am Stirnende des Kolbens 20 anliegt.

Ein freier Rand des Ventilkäfigs 44 ist als Radialflansch 50 nach außen umgeformt, gegen den eine Schraubendruckfeder als Kolbenrückstellfeder 52 drückt, die den Ventilkäfig 44 umgebend in die Laufbuchse 16 eingesetzt ist und sich am Laufbuchsenboden 18 abstützt. Die Kolbenrückstellfeder 52 hält den Ventilkäfig 44 mit seiner Ringstufe 48 in Anlage am Kolben 20 und drückt über den Radalflansch 50 und die Ringstufe 48 des Ventilkäfigs 44 den Kolben 20 gegen einen Umfang eines elektromotorisch rotierend antreibbaren Exzenters 54, der auf einer dem Einlaßventil 38 abgewandten Stirnseite des Kolbens 20 im Pumpengehäuse 12 angeordnet ist und der dem Antrieb des Kolbens 20 zu einer in axialer Richtung hin- und hergehenden Hubbewegung in an sich bekannter Weise dient. Die Kolbenrückstellfeder 52 hat somit die Doppelfunktion den Kolben 20 in Anlage am Umfang des ihn antreibenden Exzenters 54 zu halten und das Einlaßventil 38 an dem in der Laufbuchse 16 befindlichen Stirnende des Kolbens 20 zu halten. Die Kolbenrückstellfeder 52 ist erheblich stärker ausgebildet als die Ventilschließfeder 42, so daß die Kolbenrückstellfeder 52 den Ventilkäfig 44 mit seiner Ringstufe 48 gegen die Kraft der Ventilschließfeder 42 sicher am Kolben 20 hält.

Die Ventilschließfeder 42 des Einlaßventils 38 ist für einen Öffnungsdruck des Einlaßventils 38, also eine Druckdifferenz zwischen der Sackbohrung 34 im Kolben 20 und einem Verdrängungsraum 56 der Kolbenpumpe 10, der die Ventilkugel 40 gegen die Kraft der Ventilschließfeder 42 vom Ventilsitz 36 abhebt, von beispielsweise etwa 1 bar oder mehr ausgelegt. Bei Verwendung als selbstsaugende Pumpe kann die Ventilschließfeder 42 des Einlaßventils 38 auch für einen Öffnungsdruck von etwa 0,3 bar oder weniger ausgelegt werden, oder es kann ganz auf die Ventilschließfeder 42 des Einlaßventils 38 verzichtet werden. Der Verdrängungsraum 56 der Kolbenpumpe 10 ist das innerhalb der Laufbuchse 16 zwischen dem Laufbuchsenboden 18 und dem Kolben 20 mit dem Dichtring 24 eingeschlossene Volumen, das sich bei der Hubbewegung des Kolbens 20 abwechselnd vergrößert und verkleinert und dabei zur Fluidförderung Fluid in den Verdrängungsraum 56 ansaugt und anschließend verdrängt.

Als Auslaßventil 58 weist die erfindungsgemäße Kolbenpumpe 10 ebenfalls ein federbelastetes Rückschlagventil auf, das an einer dem Kolben 20 abgewandten Außenseite des Laufbuchsenbodens 18 angeordnet ist: Der Laufbuchsenboden 18 ist mit einem Mittelloch 60 versehen, das an der Außenseite des Laufbuchsenbodens 18 mit einem konischen Ventilsitz: 62 mündet. Eine Schraubendruckfeder als Ventilschließfeder 64 drückt eine Ventilkugel 66 als Ventilschließkörper gegen den Ventilsitz 62. Ventilschließfeder 64 und Ventilkugel 66 sind in einem koaxialen Sackloch 68 in einem Verschlußstopfen 70 aufgenommen, der an der Außenseite des Laufbuchsenbodens 18 angebracht ist. Der Verschlußstopfen 70 ist ein zylindrisches Teil, das auf der Seite des Laufbuchsenbodens 18 in die Pumpenbohrung 14 eingesetzt und durch eine Verstemmung 72 des Pumpengehäuses 12 die Pumpenbohrung 14 druckdicht verschließend im Pumpengehäuse 12 angebracht ist. Der Verschlußstopfen 70 fixiert die Laufbuchse 16 im Pumpengehäuse 12. Der Verschlußstopfen 70 weist einen niedrigen, hohlzylindrischen Rand 74 auf, mit dem er den Laufbuchsenboden 18 umgreift. Durch einen Bördel 76 des Randes 74 hintergreift der hohlzylindrische Rand 74 einen über einen Umfang des Laufbuchsenbodens 18 nach außen überstehenden, umlaufenden Bund 78 des Laufbuchsenbodens 18, so daß der Verschlußstopfen 70 mit der Laufbuchse 16 verbunden ist.

Ein Fluidauslaß der erfindungsgemäßen Kolbenpumpe 10 für aus dem Verdrängungsraum 56 verdrängtes Fluid erfolgt durch eine Radialnut 80 im Verschlußstopfen 70 über einen den Laufbuchsenboden 18 umgebenden Ringkanal 82 im Pumpengehäuse 12 in eine Auslaßbohrung 84, die radial zur Pumpenbohrung 14 im Pumpengehäuse 12 angebracht ist.

Die Ventilschließfeder 64 des Auslaßventils 58 ist für einen Öffnungsdruck des Auslaßventils 58 von über ein bar ausgelegt. Der Öffnungsdruck des Auslaßventils 58 ist die Druckdifferenz zwischen dem Verdrängungsraum 56 und einem Druck in der Sackbohrung 68 im Verschlußstopfen 70, der die Ventilkugel 66 gegen die Kraft der Ventilschließfeder 64 vom Ventilschlitz 62 abhebt. Der Druck im Sackloch 68 stimmt mit dem Druck in der Auslaßbohrung 84 überein, wenn man von eventuellen Strömungswiderständen absieht.

Zur Evakuierung des Verdrängungsraums 56 vor Befüllung der nicht dargestellten Fahrzeugbremsanlage, deren Bestandteil die erfindungsgemäße Kolbenpumpe 10 im dargestellten und beschriebenen Ausführungsbeispiel ist, weist die erfindungsgemäße Kolbenpumpe 10 ein Evakuierventil 86 in Form eines federlosen Rückschlagventils auf: In einem Seitenbereich des Laufbuchsenbodens 18 ist eine Durchgangsbohrung 88 angebracht, die sich mit einer konischen Ringstufe in Richtung zur Außenseite des Laufbuchsenbodens 18 erweitert. Die Ringstufe bildet einen konischen Ventilsitz 90 des Evakuierventils 86. Im erweiterten Teil der Durchgangsbohrung 88 ist eine Ventilkugel 92 aufgenommen, die einen Ventilschließkörper des Evakuierventils 86 bildet. Die Ventilkugel 92 wird durch drei über den Umfang der Durchgangsbohrung 88 verteilt angeordnete Segmentverstemmungen 94 auf einer dem Ventilsitz 90 abgewandten Seite der Ventilkugel 92 im erweiterten Teil der Durchgangsbohrung 88 gehalten. Die Segmentverstemmungen 94 halten die Ventilkugel 92 zwischen sich und dem Ventilsitz 90, sie bilden eine Ventilhubbegrenzung des Evakuierventils 86, die einen Ventilhub, um den die Ventilkugel 92 vom Ventilsitz 90 abhebbar ist, auf einen kurzen Weg begrenzen. Die Durchgangsbohrung 88 mündet in eine umlaufende Ringnut 96, die in der Außenseite des Laufbuchsenbodens 18 angebracht ist, einen gewölbten Nutquerschnitt aufweist und sicherstellt, daß die das Evakuierventil 86 aufnehmende Durchgangsbohrung 88 unabhängig von einer Winkelstellung der Laufbuchse 16 zum Verschlußstopfen 70 mit der zur Auslaßbohrung 84 führenden Radialnut 80 im Verschlußstopfen 70 kommuniziert. Das Evakuierventil 86 ist so mit dem Auslaßventil 58 hydraulisch parallel geschaltet.

Die Durchgangsbohrung 88 weist einen kleinen Durchmesser im Verhältnis zum Durchmesser des zum Auslaßventils 58 führenden Mittellochs im Laufbuchsenboden 18 auf. Infolge des kleinen Durchmessers ist die Ventilkugel 92 klein und leicht, so daß das Evakuierventil 86 auch ohne Ventilschließfeder schnell schließt. Um ein schnelles Schließen des Evakuierventils 86 sicherzustellen, ist auch dessen Öffnungshub durch die Segmentverstemmungen 94 auf einen kurzen Weg begrenzt. Aufgrund des kleinen Durchmessers der Durchgangsbohrung 88 ist der Durchströmquerschnitt des Evakuierventil 86 klein, ein Durchströmwiderstand somit hoch. Der kurze Ventilhub des Evakuierventils 86 verkleinert den Durchströmquerschnitt zusätzlich und vergrößert somit den Durchströmwiderstand. Dieser hohe Durchströmwiderstand des Evakuierventils 86 verlängert zwar eine Evakuierdauer des Verdrängungsraums 56 bei Anlegen eines Vakuums an die Einlaßbohrung 30 und die Auslaßbohrung 84 der Kolbenpumpe 10, was jedoch nicht stört. Als Auslaßventil ist das Evakuierventil 86 aufgrund seines hohen Strömungswiderstandes ungeeignet, da es einen hydraulischen Wirkungsgrad der Kolbenpumpe 10 erheblich herabsetzen und eine hohe Antriebsleistung bei trotzdem geringer Fördermenge erfordern würde. Das Auslaßventil 58 mit seinem ein Vielfaches größeren Durchströmquerschnitt und infolgedessen auf einen Bruchteil verringerten Durchströmwiderstand ist nicht durch das Evakuierventil 86 ersetzbar. Die Ventilschließfeder 64 des Auslaßventils 58 bewirkt ein schnelles Schließen des Auslaßventils 58 mit seiner im Vergleich zum Evakuierventil 86 großen und schweren Ventilkugel 66 und einem ein mehrfaches längeren Öffnungshub. Aufgrund der erforderlichen Ventilschließfeder 64, die einen Öffnungsdruck des Auslaßventils 58 von über ein bar bewirkt, eignet sich das Auslaßventil 58 nicht zur Evakuierung des Verdrängungsraums 56 der Kolbenpumpe 10.

## Patentansprüche

1. Kolbenpumpe mit einem zu einer hin- und hergehenden Hubbewegung antreibbaren Kolben, der in einem Pumpengehäuse axialverschieblich aufgenommen ist, mit einem Verdrängungsraum, dessen Volumen der Kolben bei seiner Hubbewegung abwechselnd vergrößert, wobei Fluid von der Kolbenpumpe angesaugt wird, und verkleinert, wobei Fluid aus dem Verdrängungsraum verdrängt wird, mit einem Rückschlagventil als Einlaßventil und mit einem federbelasteten Rückschlagventil als Auslaßventil, **dadurch gekennzeichnet**, daß die Kolbenpumpe (10) ein Evakuierventil (86) aufweist, das mit dem Verdrängungsraum (56) kommuniziert.

2. Kolbenpumpe nach Anspruch 1, **dadurch gekennzeichnet**, daß das Evakuierventil (86) ein in Richtung aus dem Verdrängungsraum (56) heraus durchströmbares Rückschlagventil ist.

3. Kolbenpumpe nach Anspruch 1 oder 2, **dadurch gekennzeichnet**, daß das Evakuierventil (86) dem Auslaßventil (58) hydraulisch parallel geschaltet ist.

4. Kolbenpumpe nach einem der vorhergehenden Ansprüche, **dadurch gekennzeichnet**, daß das Evakuierventil (86) federlos ist.

5. Kolbenpumpe nach Anspruch 1, **dadurch gekennzeichnet**, daß das Evakuierventil (86) einen kleinen Querschnitt und einen kleinen Ventilschließkörper (92) aufweist.

6. Kolbenpumpe nach einem der vorhergehenden Ansprüche, **dadurch gekennzeichnet**, daß das Evakuierventil (86) einen kurzen Ventilhub aufweist.

7. Kolbenpumpe nach Anspruch 6, **dadurch gekennzeichnet**, daß eine Begrenzung des Ventilhubs des Evakuierventils (86) durch eine Segmentverstemmung (94) hergestellt ist.

8. Kolbenpumpe nach Anspruch 1, **dadurch gekennzeichnet**, daß das Evakuierventil (86) in eine Ringnut (96) mündet, die mit einer Radialnut (80) kommuniziert, die zu einem Pumpenauslaß (82, 84) führt.
